# EUROPÄISCHE PATENTSCHRIFT

(11) **EP 3 071 522 B1**
(45) Veröffentlichungstag und Bekanntmachung des Hinweises auf die Patenterteilung: **14.03.2018**
(21) Anmeldenummer: 14796132.0
(22) Anmeldetag: 12.11.2014
(51) Int. Cl.: C01G 25/00, C04B 35/119, C04B 35/488

(54) **KERAMIKWERKSTOFF**
CERAMIC MATERIAL
MATIÈRE CÉRAMIQUE

(30) Priorität: 21.11.2013 DE 102013112843; 17.09.2014 DE 102014113416
(43) Veröffentlichungstag der Anmeldung: 28.09.2016
(73) Patentinhaber: OxiMa Tec GmbH Material Technologies, 73269 Hochdorf (DE)
(72) Erfinder: BURGER, Wolfgang, 73207 Plochingen (DE); KIEFER, Gundula, 73249 Wernau (DE)
(74) Vertreter: Fleck, Hermann-Josef
(86) Internationale Anmeldenummer: PCT/EP2014/074318
(87) Internationale Veröffentlichungsnummer: WO 2015/074921

(56) Entgegenhaltungen:
- EP-A1- 0 542 815
- EP-A2- 0 129 188
- EP-A2- 1 838 621
- WO-A1-2011/083023
- DE-A1- 19 850 366

## Beschreibung

Die Erfindung bezieht sich auf einen Keramikwerkstoff, der durch Mischung aus Aluminiumoxid Al₂O₃, Zirkoniumdioxid ZrO₂, Yttriumoxid Y₂O₃, Ceroxid CeO₂, Lanthanoxid La₂O₃ und Praseodymoxid Pr₆O₁₁ und durch nachfolgendes Sintern hergestellt wird und bei dem nach dem Sintern im fertigen Werkstoff eine Aluminiumoxidmatrix in einem Anteil von 55 - 90 Vol.-% und das Zirkoniumdioxid in einem Anteil von 10 - 45 Vol.-% vorliegen, wobei im fertigen Werkstoff das Zirkoniumdioxid zu mindestens 75 Vol.-% in seiner tetragonalen Modifikation vorliegt und chemisch durch eine Mischung Yttriumoxid und Ceroxid stabilisiert ist.

Ein Keramikwerkstoff dieser Art und ein daraus hergestellter Sinterformkörper ist in der EP 0 542 815 B1 angegeben. Dieser bekannte Keramikwerkstoff bzw. Sinterformkörper enthält eine Matrix aus 60 - 98 Vol.-% Al₂O₃-Cr₂O₃-Mischkristall, wobei beschrieben ist, dass diese Aluminiumoxidmatrix aus 67,1 - 99,2 Vol.-% aus dem Al₂O₃₋Cr₂O₃-Mischkristall und 0,8 - 32,9 Vol.-% SrAl₁₂ₓCrₓO₁₉ mit x = 0,0007 bis 0,045 besteht. Außerdem enthält der Keramikwerkstoff bzw. Sinterkörper 2 - 40 Vol.-% tetragonal stabilisiertes Zirkoniumdioxid (ZrO₂), das mit 0,2 - 3 Mol.-% Y₂O₃ bzw. 10 - 15 Mol.-% CeO₂, Pr₆O₁₁, Tb₂O₃ stabilisiert ist.

In der DE 198 50 366 A1 ist ein plateletverstärkter Sinterformkörper mit einer ähnlichen Zusammensetzung beschrieben, wie in der vorstehenden Druckschrift. Die Platelets können dabei allerdings aus den verschiedensten ternären Oxiden gebildet werden.

In der EP 2 513 010 A1 ist ein Verbundwerkstoff aus Aluminiumoxid als keramische Matrix mit darin dispergiertem Zirkonoxid beschrieben, wobei das Zirkonoxid zum überwiegenden Teil in der tetragonalen Phase vorliegt und die Stabilisierung der tetragonalen Phase zum überwiegenden Teil nicht chemisch, sondern mechanisch erfolgt. Der Aluminiumoxidanteil beträgt mindestens 65 Vol.-%, während der Zirkoniumoxidanteil 10 - 35 Vol.-% beträgt.

In den genannten Druckschriften ist darauf hingewiesen, dass derartige Keramikformkörper eine hohe Festigkeit und Bruchzähigkeit bei hoher Härte aufweisen. Bei der letztgenannten Druckschrift soll insbesondere die mechanische Stabilisierung auch eine erhöhte Beständigkeit des Werkstoffs gegenüber Wasser bei erhöhten Temperaturen ergeben. Gleichwohl ist es schwierig, bei solchen Verbundwerkstoffen negative Auswirkungen durch derartige äußere Einflüsse völlig zu unterbinden.

Die US 7,939,041 B2 zeigt eine chemische Zusammensetzung, die 20 - 70 Gew.-% Al₂O₃, 10 - 77 Gew.-% ZrO₂, 0 - 34 Gew.-% CeO₂ und 0 - 22 Gew.-% RE (Seltenerd)-Oxid enthält, welche über den Copräzipationsprozess hergestellt wird. Die Herstellung der homogenen Pulvermischung ist näher beschrieben: wasserlösliche Salze (Nitrate) werden in Wasser gelöst und dann unter Anwendung von Natronlauge bei einem pH-Wert 10 cogefällt. Über die thermische Behandlung bei unterschiedlichen Temperaturen wird eine spezifische Oberfläche in der Pulvermischung erzeugt. Je höher die Kalzinationstemperatur wird, desto niedriger wird die spezifische Oberfläche. Ein Hinweis auf die Phasenzusammensetzung nach dem Kalzinationsprozess oder besondere mechanische Stabilitätseigenschaften eines hergestellten Keramikkörpers ist nicht gegeben.

Der vorliegenden Erfindung liegt die Aufgabe zugrunde, einen Keramikwerkstoff der eingangs genannten Art bereit zu stellen, mit dem eine erhöhte Widerstandsfähigkeit gegenüber äußeren Einwirkungen im Einsatzfalle erreicht wird. Auch soll ein Verfahren zum Herstellen des Keramikwerkstoffes angegeben werden.

Diese Aufgabe wird mit den Merkmalen der Ansprüche 1 bzw. 10 gelöst.

Bei dem Keramikwerkstoff ist vorgesehen, dass ein Anteil von 10 - 75 Vol.-% der Aluminiumoxidmatrix in Form von hexagonalen Plättchen der Zusammensetzung (Ce, La) Al₁₁O₁₈ oder LaAl₁₁0₁₈ (Lanthanaluminat) vorliegt und dass durch Zulegierung von 0,1 - 1,0 Vol.-% Pr₆0₁₁ bezogen auf die Gesamtmischung (Gesamtzusammensetzung) beim Sintern ein entsprechender Mischkristall in der Aluminiumoxidmatrix ausgebildet ist, und zwar durch chemische Reaktion mit dem Aluminiumoxid, dem Lanthanaluminat und/oder dem Zirkoniumdioxid.

In der Zusammensetzung des Keramikwerkstoffs nach Anspruch 1 ergänzen sich das Aluminiumoxid und das Zirkoniumoxid mit betreffenden Bestandteilen zu 100 % (bis auf unvermeidbare Verunreinigungen), wobei die obere Grenze des Anteils an Aluminiumoxid bzw. an Zirkoniumoxid entsprechend dem Anteil an zulegiertem Pr₆O₁₁ verringert wird, so dass die Ergänzung zu 100 % (mit unvermeidbaren Verunreinigungen) eingehalten wird.

Die chemische Zusammensetzung der Pulvermischung besteht aus folgenden Edukten:
- 55 - (näherungsweise) 90 Vol.-% Al₂O₃
- 10 - (näherungsweise) 45 Vol.-% ZrO₃
- Y₂O₃ und CeO₂ (als Stabilisator für metastabiles tetragonales ZrO₂ bzw. CeO₂ unter Ausbildung eines Mischkristalls bzw. CeO₂ als potentieller Mischkristall zur Ausbildung von CeAl₁₁O₁₈)
- La₂O₃ (zur Bildung von LaAl₁₁O₁₈)
- Pr₆O₁₁ (zur Bildung eines Mischkristalls mit Al₂O₃ bzw. ZrO₂)

Während des Sinterprozesses finden dann die folgenden chemischen Reaktionen statt:

11 Al₂O₃ + La₂O₃ → LaAl₁₁O₁₈

ZrO₂ + Y₂O₃ + CeO₂ → ZrO₂: Y, Ce

11 Al₂O₃ + CeO₂ → CeAl₁₁O₁₈

Al₂O₃ + ZrO₂ + Pr₆O₁₁ → Al2O3:Pr + ZrO₂:Pr

(Mit der Schreibweise ZrO₂: Y, Ce wird die Bildung eines Mischkristalls ausgedrückt, wohingegen die Ausbildung von kristallographisch definierten Phasen jeweils mit der Formel ausgedrückt wird.)

Wesentlich ist hierbei insbesondere auch die Ausbildung des Mischkristalls durch die chemische Reaktion von Pr₆O₁₁ und Al₂O₃ bzw. ZrO₂ bzw. dem Lanthanaluminat.

Die chemische Mischstabilisierung ergibt bei der genannten Zusammensetzung hohe Beständigkeit. Diese wird weiter gesteigert durch die Tatsache, dass das zulegierte Ceroxid sowohl die metastabile Zirkoniumdioxidphase stabilisiert und gleichzeitig aber auch anisotrop ausgebildete Kristallite mit Aluminiumoxid ausbildet, wobei die Prozessführung auf diese Ausbildung der Kristallite ausgerichtet ist.

Bei dem Verfahren ist vorgesehen, dass eine homogene Pulvermischung aus yttrium- und ceroxid beschichteten Zirkoniumdioxidkörnern, Aluminiumoxid, Lanthanoxid und Praseodymoxid über eine Mischmahlung in Wasser in einer Rührwerkskugelmühle hergestellt wird, wonach in einem weiteren Schritt nach Zugabe eines Bindersystems die wässrige Pulverdispersion einem Sprühtrocknungsprozess unterzogen wird.

Ferner bezieht sich die Erfindung auf die Verwendung des Keramikwerkstoffs zur Herstellung eines Sinterformkörpers aus einem solchen Keramikwerkstoff sowie zur Herstellung eines Spritzgussteils unter Verwendung eines solchen Keramikwerkstoffs.

Vorteilhafte Ausgestaltungen sind in den abhängigen Ansprüchen angegeben.

Zu vorteilhaften Eigenschaften des Keramikwerkstoffs tragen die Maßnahmen bei, dass der maximale Anteil an Yttriumoxid im Bereich von 0,5 - 2,5 Mol.-% und der Anteil an Ceroxid im Bereich zwischen 2 - 10 Mol-% bezogen auf das Zirkoniumdioxid liegt.

Die Beständigkeit des Keramikwerkstoffs wird dadurch begünstigt, dass der Anteil der hexagonalen Plättchen im Bereich von 20 - 60 Vol.-%, insbesondere von 33 - 50 Vol.-%, der Aluminiumoxidmatrix liegt.

Weitere Vorteile ergeben sich daraus, dass der maximale Anteil an Yttriumoxid im Bereich von 1,0 - 2,0 Mol.-%, insbesondere von 1,5 - 1,8 Mol.-%, bezogen auf das Zirkoniumdioxid liegt, und ferner daraus, dass der maximale Anteil an Ceroxid im Bereich von 2,5 - 6 Mol.-%, insbesondere von 3 - 5 Mol.-%, bezogen auf das Zirkoniumdioxid liegt.

Wesentliche Vorteile werden ferner dadurch erreicht, dass der Anteil der Zulegierung von Pr₆O₁₁ im Bereich von 0,2 - 0,8 Vol.%, insbesondere von 0,25 - 0,5 Vol.-%, liegt. Bei dem Verfahren ist vorteilhaft vorgesehen, dass das aus dem Sprühtrocknungsprozess erhaltene Sprühgranulat direkt verpresst oder unter Zusatz von organischen Polymeren plastifiziert und danach im Spritzgussverfahren zu Bauteilen verarbeitet wird.

Die Herstellung der Pulvermischung erfolgt über die Mischmahlung, gefolgt von einem Sprühtrocknungsprozess. Entweder wird das Sprühgranulat direkt verpresst oder aber unter Zusatz von organischen Polymeren plastifiziert und dann im Spritzgussverfahren zu Bauteilen verarbeitet.

Der neue Keramikwerkstoff eignet sich wegen seiner hohen mechanischen Widerstandsfähigkeit beispielsweise vorteilhaft für die Herstellung von Zerspanungswerkzeugen für die Bearbeitung von glasfaser- und kohlefaserverstärkten Kunststoffen bzw. Graphit sowie für die Zerspanung von Nickelbasislegierungen und Eisenwerkstoffen.

Eine weitere Anwendung der neuartigen Keramikwerkstoffe ist die Herstellung von Bohrern für das Bohren der oben genannten Werkstoffe sowie als Dentalbohrer.

Durch die Mischstabilisierung wird die Phasenumwandlung von tetragonalem ZrO₂ zur monoklinen Phase, welche z. B. durch hydrothermale Behandlung oder mechanische Bearbeitung induziert werden kann, weitestgehend verhindert. Dies wirkt Dimensionsveränderungen entgegen bzw. eliminiert diese.

Einige Zusammensetzungen der neuartigen Keramikwerkstoffe sind in der nachfolgenden Tabelle mit diesbezüglichen Kenngrößen wiedergegeben, wobei zudem zwei Vergleichsbeispiele genannt sind.

| | **Vergleichsbsp. 1** | | **Vergleichsbsp. 2** | | **Bsp.1** | | **Bsp. 2** | | **Bsp**. **3** | | **Bsp. 4** | | **Bsp. 5** | |
|---|---|---|---|---|---|---|---|---|---|---|---|---|---|---|
| | **ox.** | **HIP** | **ox.** | **HIP** | **ox.** | **HIP** | **ox.** | **HIP** | **ox.** | **HIP** | **ox.** | **HIP** | **ox.** | **HIP** |
| Al₂O₃ [wt-%] | 73,8 | | 74,1 | | 72,5 | | 72,2 | | 72,5 | | 72,7 | | 72,4 | |
| Cr₂O₃ [wt-%] | | | 0,4 | | | | | | | | | | | |
| SrO [wt-%] | 0,8 | | 0,8 | | | | | | | | | | | |
| La₂O₃ [wt-%] | | | | | 2,5 | | 2,5 | | 2,5 | | 2,5 | | 2,5 | |
| ZrO₂ [wt-%]M1 | 24,5 | | 24,3 | | | | | | | | | | | |
| ZrO₂ [wt-%]OZ | | | | | 23,1 | | 23,1 | | 23,3 | | 23,3 | | 23,3 | |
| Y₂O₃ [wt-%] | 0,5 | | 0,8 | | 0,5 | | 0,5 | | 0,5 | | 0,5 | | 0,5 | |
| CeO₂ [wt-%] | | | | | 1,2 | | 1,2 | | 1,0 | | 0,8 | | 0,8 | |
| Pr₆O₁₁ [wt-%] | | | | | 0,2 | | 0,5 | | 0,2 | | 0,2 | | 0,5 | |
| ρ_{E} [g/cm³] | | 4,37 | 4,33 | 4,38 | 4,28 | 4,38 | 4,31 | 4,38 | 4,32 | 4,40 | 4,31 | 4,40 | 4,34 | 4,40 |
| HV_{0.5} | | | 2128 | 2297 | 1859 | 2107 | 2128 | 2297 | 1833 | 2149 | 2020 | 2093 | 2076 | 2093 |
| HV₁₀ | | 1782 | 1878 | 1944 | 1542 | 1791 | 1878 | 1944 | 1565 | 1802 | 1571 | 1751 | 1608 | 1789 |
| K_{lc} [MPa√m] | | 5,9 | 5,8 | 5,9 | 6,0 | 6,3 | 6,6 | 7,2 | 6,8 | 7,5 | 6,5 | 7,5 | 6,9 | 7,8 |
| σ_{4B} [MPa] | | 1100 | 780 | 1080 | 820 | 1220 | 810 | 1130 | 850 | 1225 | 890 | 1200 | 875 | 1250 |

## Patentansprüche

1. Keramikwerkstoff, der durch Mischung aus Aluminiumoxid Al₂O₃, Zirkoniumdioxid ZrO₂, Yttriumoxid Y₂O₃, Ceroxid CeO₂, Lanthanoxid La₂O₃ und Praseodymoxid Pr₆O₁₁ und durch nachfolgendes Sintern hergestellt wird und bei dem nach dem Sintern im fertigen Werkstoff eine Aluminiumoxidmatrix in einem Anteil von 55 - 90 Vol.-% und das Zirkoniumdioxid in einem Anteil von 10 - 45 Vol.-% vorliegen, wobei im fertigen Werkstoff das Zirkoniumdioxid zu mindestens 75 Vol.-% in seiner tetragonalen Modifikation vorliegt und chemisch durch eine Mischung aus Yttriumoxid und Ceroxid stabiliert ist,
**dadurch gekennzeichnet,**
**dass** ein Anteil von 10 - 75 Vol.-% der Aluminiumoxidmatrix in Form von hexagonalen Plättchen der Zusammensetzung LaAl₁₁0₁₈ vorliegt und
**dass** der Anteil an zulegiertem Praseodymoxid 0,1 - 1,0 Vol.% bezogen auf die Gesamtmischung beträgt und beim Sintern ein Mischkristall durch chemische Reaktion mit Aluminiumoxid, Lanthanaluminat und/oder Zirkoniumoxid in dem fertigen Werkstoff ausgebildet wird.

2. Keramikwerkstoff nach Anspruch 1,
**dadurch gekennzeichnet,**
**dass** der maximale Anteil an Yttriumoxid im Bereich von 0,5 - 2,5 Mol.-%, bezogen auf das Zirkoniumdioxid liegt.

3. Keramikwerkstoff nach Anspruch 1 oder 2,
**dadurch gekennzeichnet,**
**dass** der maximale Anteil an Ceroxid im Bereich von 2 - 10 Mol.%, bezogen auf das Zirkoniumdioxid liegt.

4. Keramikwerkstoff nach einem der vorhergehenden Ansprüche,
**dadurch gekennzeichnet,**
**dass** der Anteil der hexagonalen Plättchen im Bereich von 20 - 60 Vol.-%, insbesondere von 33 - 50 Vol.-%, der Aluminiumoxidmatrix liegt.

5. Keramikwerkstoff nach einem der vorhergehenden Ansprüche,
**dadurch gekennzeichnet,**
**dass** der maximale Anteil an Yttriumoxid im Bereich von 1,0 - 2,0 Mol.%, insbesondere von 1,5 - 1,8 Mol.-%, bezogen auf das Zirkoniumdioxid liegt.

6. Keramikwerkstoff nach einem der vorhergehenden Ansprüche,
**dadurch gekennzeichnet,**
**dass** der maximale Anteil an Ceroxid im Bereich von 2,5 - 6 Mol.-%, insbesondere von 3 - 5 Mol.%, bezogen auf das Zirkoniumdioxid liegt.

7. Keramikwerkstoff nach einem der vorhergehenden Ansprüche,
**dadurch gekennzeichnet,**
**dass** der Anteil der Zulegierung von Pr₆O₁₁ im Bereich von 0,2 - 0,8 Vol.-%, insbesondere von 0,25 - 0,5 Vol.-%, liegt.

8. Verwendung eines Keramikwerkstoffs nach einem der Ansprüche 1 bis 7 zur Herstellung eines Sinterformkörpers.

9. Verwendung eines Keramikwerkstoffs nach einem der Ansprüche 1 bis 7 zur Herstellung eines Spritzgussteils.

10. Verfahren zum Herstellen eines Keramikwerkstoffs nach einem der Ansprüche 1 bis 7, bei dem eine Pulvermischung aus yttrium- und ceroxid beschichteten Zirkoniumdioxidkörnern, Aluminiumoxid, Lanthanoxid und Praseodymoxid über eine Mischmahlung in Wasser in einer Rührwerkskugelmühle hergestellt wird und in einem weiteren Schritt ein Sprühtrocknungsprozess auf die wässrige Pulverdispersion angewendet wird,
**dadurch gekennzeichnet,**
**dass** das Praseodymoxid in einem Anteil von 0,1 - 1,0 Vol.-% bezogen auf die Gesamtzusammensetzung zulegiert wird und nachfolgend ein Sinterprozess durchgeführt und dabei mit der Aluminiumoxidmatrix und/oder Zirkoniumdioxid und/oder Lanthanaluminat ein Mischkristall ausgebildet wird.

11. Verfahren nach Anspruch 10,
**dadurch gekennzeichnet,**
**dass** das aus dem Sprühtrocknungsprozess erhaltene Sprühgranulat direkt verpresst oder unter Zusatz von organischen Polymeren plastifiziert und danach im Spritzgussverfahren zu Bauteilen verarbeitet wird.

## Claims

1. A ceramic material, which is produced by mixing aluminium oxide Al2O3, zirconium dioxide Zr02, yttrium oxide Y203, cerium oxide Ce02, lanthanum oxide La203 and praseodymium oxide Pr6011 and subsequent sintering and in which, after sintering, an aluminium oxide matrix is present in the finished material in a proportion of 55-90 vol.% and the zirconium dioxide is present in a proportion of 10-45 vol.%, at least 75% of the zirconium dioxide present in the finished material being present in its tetragonal modification and chemically stabilised by a mixture of yttrium oxide and cerium oxide,
**characterised in that**
a proportion of 10-75 vol.% of the aluminium oxide matrix is present in the form of hexagonal platelets of the composition LaAl11O18 and
the proportion of praseodymium oxide added by alloying amounts to 0.1-1.0 vol.% based on the entire mixture and during sintering a mixed crystal is formed in the finished material by a chemical reaction with aluminium oxide, lanthanum aluminate and/or zirconium oxide.

2. The ceramic material according to claim 1,
**characterised in that**
the maximum proportion of yttrium oxide lies in the range from 0.5-2.5 mol.% based on the zirconium dioxide.

3. The ceramic material according to claim 1 or 2,
**characterised in that**
the maximum proportion of cerium oxide lies in the range from 2-10 mol.% based on the zirconium dioxide.

4. The ceramic material according to one of the preceding claims,
**characterised in that**
the proportion of hexagonal platelets lies in the range from 20-60 vol.%, in particular from 33-50 vol.%, of the aluminium oxide matrix.

5. The ceramic material according to one of the preceding claims,
**characterised in that**
the maximum proportion of yttrium oxide lies in the range from 1.0-2.0 mol.%, in particular from 1.5 -1.8 mol.%, based on the zirconium dioxide.

6. The ceramic material according to one of the preceding claims,
**characterised in that**
the maximum proportion of cerium oxide lies in the range from 2.5-6 mol.%, in particular from 3-5 mol.%, based on the zirconium dioxide.

7. The ceramic material according to one of the preceding claims,
**characterised in that**
the proportion of Pr6011 added by alloying lies in the range from 0.2-0.8 vol.%, in particular from 0.25-0.5 vol.%.

8. Use of a ceramic material according to one of claims 1 to 7 to produce a sintered moulding.

9. Use of a ceramic material according to one of claims 1 to 7 to produce an injection moulding.

10. A method of producing a ceramic material according to one of claims 1 to 7, in which a powder mixture of yttrium oxide- and cerium oxide-coated zirconium oxide grains, aluminium oxide, lanthanum oxide and praseodymium oxide is produced by mixing/grinding in water in a stirred ball mill and in a further step a spray drying process is applied to the aqueous powder dispersion, **characterised in that**
the praseodymium oxide is added by alloying in a proportion of 0.1-1.0 vol.% based on the entire composition and subsequently a sintering process is performed, a mixed crystal with the aluminium oxide matrix and/or zirconium dioxide and/or lanthanum aluminate being formed in the process.

11. The method according to claim 10,
**characterised in that**
the spray granules obtained from the spray drying process are directly press-moulded or plasticised with the addition of organic polymers and then processed into components in an injection moulding process.

## Revendications

1. Matière céramique qui est fabriquée à partir du mélange d'oxyde d'aluminium Al2O3, de dioxyde de zirconium Zr02, d'oxyde d'yttrium Y203, d'oxyde de cérium Ce02, d'oxyde de lanthane La203 et d'oxyde de praséodyme Pr6011 et par un frittage ultérieur et dans lequel une fois le frittage effectué dans la matière finie se trouve une matrice d'oxyde d'aluminium dans une proportion entre 55 et 90 % en volume et le dioxyde de zirconium dans une proportion entre 10 et 45 % en volume, dans la matière finie le dioxyde de zirconium est d'au moins 75 % en volume dans sa modification tétragonale et est stabilisé chimiquement par un mélange d'oxyde d'yttrium et d'oxyde de cérium,
**caractérisée en ce**
**qu'**une proportion comprise entre 10 et 75 % en volume de la matrice d'oxyde d'aluminium se présente sous la forme de plaquettes hexagonales de la composition LaAl11O18 et
en ce que la proportion d'oxyde de praséodyme allié s'élève entre 0,1 et 1,0 en % en volume rapporté au mélange total et lors du frittage se forme un cristal mixte par réaction chimique de l'oxyde d'aluminium, de l'aluminate de lanthane et/ou de l'oxyde de zirconium dans la matière finie.

2. Matière céramique selon la revendication 1,
caractérisée en ce
la proportion maximale d'oxyde d'yttrium se situe dans une plage comprise entre 0,5 et 2,5 % en moles, rapporté à l'oxyde de zirconium.

3. Matière céramique selon la revendication 1 ou 2,
caractérisée en ce
la proportion maximale d'oxyde de cérium se situe dans la plage comprise entre 2 et 10 % en moles, rapporté à l'oxyde de zirconium.

4. Matière céramique selon l'une quelconque des revendications précédentes,
caractérisée en ce
la proportion des plaquettes hexagonales se situe dans la plage comprise entre 20 et 60 % en volume, notamment entre 33 et 50 % en volume de la matrice d'oxyde d'aluminium.

5. Matière céramique selon l'une quelconque des revendications précédentes,
caractérisée en ce
la proportion maximale d'oxyde d'yttrium se situe dans la plage comprise entre 1,0 et 2,0 % en volume, notamment entre 1,5 et 1,8 % en moles, rapporté à l'oxyde de zirconium.

6. Matière céramique selon l'une quelconque des revendications précédentes,
caractérisée en ce
la proportion maximale d'oxyde de cérium se situe dans la plage comprise entre 2,5 et 6 % en moles, notamment entre 3 et 5 % en moles, rapporté au dioxyde de zirconium.

7. Matière céramique selon l'une quelconque des revendications précédentes,
caractérisée en ce
la proportion de l'alliage de Pr6011 se situe dans la plage comprise entre 0,2 et 0,8 % en volume, notamment entre 0,25 et 0,5 % en volume.

8. Utilisation d'une matière céramique selon l'une des revendications 1 à 7 destinée à la fabrication d'un corps moulé de frittage.

9. Utilisation d'une matière céramique selon l'une des revendications 1 à 7 destinée à la fabrication d'une pièce moulée par injection.

10. Procédé de fabrication d'une matière céramique selon l'une des revendications 1 à 7, selon lequel un mélange de poudre constitué de granulés de dioxyde de zirconium revêtus d'oxyde d'yttrium et d'oxyde de cérium, d'oxyde d'aluminium, d'oxyde de lanthane et d'oxyde de praséodyme est fabriqué par un broyage mixte dans l'eau dans un broyeur opérant par friction et dans une autre étape un processus de séchage par pulvérisation est utilisé sur la dispersion de poudre aqueuse,
**caractérisé en ce**
**que** l'oxyde de praséodyme est allié dans une proportion comprise entre 0,1 et 1,0 % en volume, rapporté à la composition totale et ensuite un processus de frittage est réalisé et un cristal mixte se forme ainsi au moyen de la matrice d'oxyde d'aluminium et/ou de dioxyde de zirconium et/ou d'aluminate de lanthane.

11. Procédé selon la revendication 10,
caractérisé en ce
le granulé pulvérisé obtenu selon le procédé de séchage par pulvérisation est directement comprimé ou plastifié par addition de polymères organiques et ensuite est moulé selon le procédé de moulage par injection.
